# EUROPEAN PATENT APPLICATION

(11) **EP 3 185 200 A1**
(43) Date of publication of application: **28.06.2017**
(21) Application number: 16205372.2
(22) Date of filing: 20.12.2016
(51) Int. Cl.: G06Q 30/06, G06Q 30/02

(54) **POINT-OF-SALE TERMINAL INCLUDING A TOUCH PANEL SCREEN HAVING EXPANDED AREAS FOR SELECTING OBJECTS WHEN THE OBJECTS ARE PARTIALLY OBSCURED**

(30) Priority: 24.12.2015 JP 2015251347
(71) Applicant: Toshiba TEC Kabushiki Kaisha, Tokyo 141-0032 (JP)
(72) Inventor: GOTANDA, Tsuyoshi, Shinagawa-ku, Tokyo 141-8562 (JP); SUSAKI, Akiko, Shinagawa-ku, Tokyo 141-8562 (JP); HIRAMATSU, Kenya, Shinagawa-ku, Tokyo 141-8562 (JP)
(74) Representative: Takeuchi, Maya

(57) **Abstract**

A point-of-sale terminal includes a touch panel screen displaying first selectable objects and a second selectable object associated with one of the first selectable objects, first and second memory regions, and a processor. The first memory region stores for each of first selectable objects, display location and size, attributes of an image, and an operation command to be issued upon selection of the first selectable object. The second memory region stores data of the second selectable object. The processor is configured to arrange the second selectable object to be partially overlaid on one of the first selectable objects on the touch panel screen, such that responsive to a selection of the second selectable object or the partially overlaid first selectable object, the operation command for the partially overlaid first selectable object is issued.

## Description

### FIELD

Embodiments described herein relate generally to a point-of-sale terminal including a touch panel screen having expanded areas for selecting objects when the objects are partially obscured.

### BACKGROUND

In general, a touch panel input device receives information assigned to a touch key displayed on the touch panel when the touch key is selected. Such a touch panel input device is used for, for example, a self POS terminal which enables customers to checkout merchandise by themselves.

Each touch key is usually displayed with text or an image which represents information assigned thereto. Therefore, a user can know the information assigned to the touch key from the text or image. On the other hand, there is a demand for notifying information relating to the information assigned to the touch keys to users. For example, a retail store may conduct sales promotion of offering double service points to shoppers who pay by credit cards associated with the retail store. In this case, in the related art, advertisement of the promotion is put up in the store, or the promotional content is displayed on a display in the store, so that the content is notified to the shoppers. However, it is found that the pop-up advertisement or the display advertisement in the store are not effective in communicating the advertised message to shoppers.

### DESCRIPTION OF THE DRAWINGS

FIG. 1 is a block diagram of a self POS terminal.
FIG. 2 illustrates an example of screen transitions of screens displayed on a touch panel of the self POS terminal.
FIG. 3 illustrates an example of a shopping selection screen displayed on the touch panel.
FIG. 4 illustrates an example of a merchandise selection screen displayed on the touch panel.
FIG. 5 illustrates an example of a payment selection screen displayed on the touch panel.
FIG. 6 schematically illustrates a data structure of a main data table.
FIG. 7 is a flow chart showing a procedure of a screen display process executed by a CPU of the self POS terminal.
FIG. 8 is a flow chart showing a procedure of an input reception process executed by the CPU.
FIG. 9 schematically illustrates a main data table used in the self POS terminal according to a second embodiment.
FIG. 10 is a flow chart showing a procedure of a screen display process executed by a CPU of the self POS terminal according to the second embodiment.

### DETAILED DESCRIPTION

An embodiment provides a touch panel input device with which a user is more likely to be aware of information related to information assigned to a touch key.

In general, according to an embodiment, a point-of-sale terminal includes a touch panel screen, a data storage including a first memory region for storing for each of multiple first selectable objects to be displayed on the touch panel screen, display location and display size of the first selectable object, attributes of an image to be displayed as the first selectable object, and an operation command to be issued upon selection of the first selectable object, and a second memory region for storing data of a second selectable object to be overlaid on one of the first selectable objects that is associated therewith, on the touch panel screen, and a processor. The processor is configured to arrange the first selectable objects on the touch panel screen in accordance with the locations and sizes and the attributes stored in the first memory region, determine a location and a size of the second selectable object, based on the location and size of the first selectable object that is associated with the second selectable object, arrange the second selectable object of the determined size on the determined location of the touch panel screen, so as to be at least partially overlaid on the associated first selectable object, and responsive to a selection of the second selectable object or the first selectable object associated with the second selectable object, issue the operation command for the first selectable object associated with the second selectable object.

According to the present invention, the user can easily realize the second selectable object which is information accompanied with the first selectable object. As a result, the point-of-sale terminal can diffuse the information accompanied with the first selectable object more efficiently.

Preferably, the location and size of the second selectable object is determined also based on the attributes of the image to be displayed as the first selectable object associated with the second selectable object.

Preferably, the second selectable object covers an area on the touch panel screen not covered by the first selectable object associated therewith.

Preferably, the data of the second selectable object include a display term during which the additional selectable object is set to be displayed on the touch panel screen, and the second selectable object is displayed on the touch panel screen, upon determination that a current time and date is within the display term.

The present invention also relates to a method of configuring a layout of selectable objects on a touch panel screen of a point-of-sale terminal, comprising: in a first memory region, storing for each of multiple first selectable objects to be displayed on the touch panel screen, display location and display size of the first selectable object, attributes of an image to be displayed as the first selectable object, and an operation command to be issued upon selection of the first selectable object; in a second memory region, storing data of a second selectable object to be overlaid on one of the first selectable objects that is associated therewith, on the touch panel screen; arranging the first selectable objects on the touch panel screen in accordance with the locations and sizes and the attributes stored in the first memory region; determining a location and a size of the second selectable object, based on the location and size of the first selectable object that is associated with the second selectable object; arranging the second selectable object of the determined size on the determined location of the touch panel screen, so as to be at least partially overlaid on the associated first selectable object; and responsive to a selection of the second selectable object or the first selectable object associated with the second selectable object, issue the operation command for the first selectable object associated with the second selectable object.

Preferably, the location and size of the second selectable object is determined also based on the attributes of the image to be displayed as the first selectable object associated with the second selectable object.

Preferably, the second selectable object covers an area on the touch panel screen not covered by the first selectable object associated therewith.

Preferably, the data of the second selectable object include a display term during which the additional selectable object is set to be displayed on the touch panel screen, and the second selectable object is displayed on the touch panel screen, upon determination that a current time and date is within the display term.

The present invention further relates to a non-transitory computer readable medium comprising instructions to be executed in a point-of-sale terminal having a touch panel screen, wherein the instructions when executed on a processor of the point-of-sale terminal carry out a method of configuring a layout of selectable objects on the touch panel screen, comprising: in a first memory region, storing for each of multiple first selectable objects to be displayed on the touch panel screen, display location and display size of the first selectable object, attributes of an image to be displayed as the first selectable object, and an operation command to be issued upon selection of the first selectable object; in a second memory region, storing data of a second selectable object to be overlaid on one of the first selectable objects that is associated therewith, on the touch panel screen; arranging the first selectable objects on the touch panel screen in accordance with the locations and sizes and the attributes stored in the first memory region; determining a location and a size of the second selectable object, based on the location and size of the first selectable object that is associated with the second selectable object; arranging the second selectable object of the determined size on the determined location of the touch panel screen, so as to be at least partially overlaid on the associated first selectable object; and responsive to a selection of the second selectable object or the first selectable object associated with the second selectable object, issue the operation command for the first selectable object associated with the second selectable object.

Preferably, the location and size of the second selectable object is determined also based on the attributes of the image to be displayed as the first selectable object associated with the second selectable object.

Preferably, the second selectable object covers an area on the touch panel screen not covered by the first selectable object associated therewith.

Preferably, the data of the second selectable object include a display term during which the additional selectable object is set to be displayed on the touch panel screen, and the second selectable object is displayed on the touch panel screen, upon determination that a current time and date is within the display term.

Hereinafter, embodiments according to a touch panel input device will be described, as non-limiting examples, with reference to the drawings. The embodiments illustrate a touch panel input device that functions as a display device and an input device of a self POS terminal.

### First Embodiment

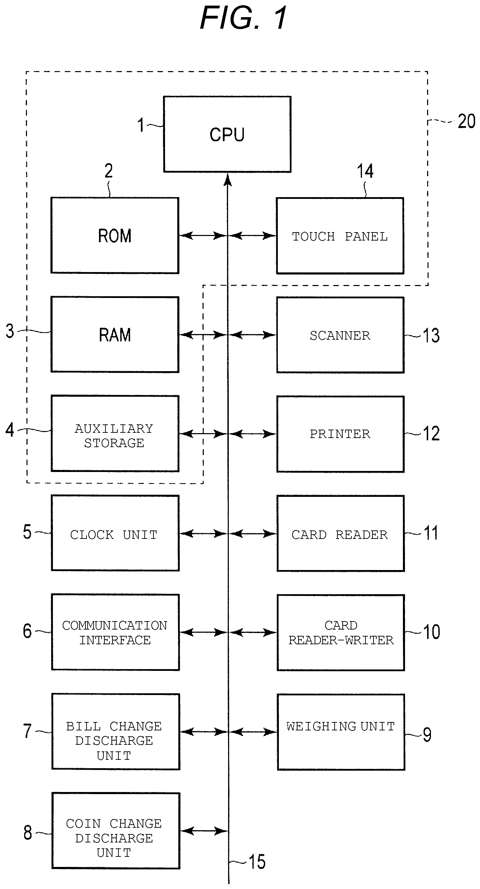

FIG. 1 is a block diagram of the self POS terminal. The self POS terminal includes a central processing unit (CPU) 1, a read only memory (ROM) 2, a random access memory (RAM) 3, an auxiliary storage unit 4, a clock unit 5, a communication interface 6, a bill change unit 7, a coin change unit 8, a weighing unit 9, a card reader-writer 10, a card reader 11, a printer 12, a scanner 13, a touch panel 14, and a system bus 15. In the self POS terminal, the computer is configured such that the CPU 1, the ROM 2, the RAM 3, and the auxiliary storage unit 4 are connected by the system bus 15.

The CPU 1 corresponds to a central part of the computer. The ROM 2 corresponds to a main storage of the computer. An operating system and an application program are stored in the ROM 2. The RAM 3 corresponds to a main storage of the computer. The RAM 3 stores data necessary for the CPU 1 to execute a process. The auxiliary storage unit 4 corresponds to an auxiliary storage of the computer. The auxiliary storage unit 4 is, for example, an electric erasable programmable read-only memory (EEPROM), a hard disc drive (HDD), or a solid state drive (SSD).

The clock unit 5, the communication interface 6, the bill change unit 7, the coin change unit 8, the weighing unit 9, the card reader-writer 10, the card reader 11, the printer 12, the scanner 13, and the touch panel 14 are connected to the system bus 15 directly or indirectly via a signal input and output circuit.

The clock unit 5 functions as a time information source of the self POS terminal. The CPU 1 tracks current date and time on a basis of time information tracked by the clock unit 5. The communication interface 6 performs data communication with equipment (for example, attendant terminal, store server, or the like) which is connected to the communication interface 6 via a LAN in accordance with a communication protocol set in advance. The bill change discharge unit 7 calculates an amount of input money by counting bills inserted from a bill insertion slot by type of the bills, and stores the inserted bills in the safe by type of the bills. Also, the bill change discharge unit 7 takes out of the bills required as change from the safe, and discharges the bills to a bill discharge opening according to a change payout instruction given from the CPU 1. The coin change discharge unit 8 calculates an amount of input money by counting coins inserted from a coin insertion slot by type of the coins, and stores the inserted coins in the safe by type of the coins. Also, the coin change discharge unit 8 takes out of the coins required as change from the safe, and discharges the coins to a coin discharge opening according to the change payout instruction given from the CPU 1. The weighing unit 9 weighs merchandise registered via the scanner 13 or the touch panel 14. The card reader-writer 10 reads data written in an IC card, and writes the data to the IC card in non-contact manner. The IC card is, for example, an electronic money card, a point card, a credit card, or the like. The card reader 11 reads data written in a magnetic card. The magnetic card is, for example, a credit card, a point card, or the like. The printer 12 prints receipt data indicating details of a commercial transaction on a predetermined receipt sheet. The scanner 13 optically reads a bar code. The bar codes indicating merchandise-specific codes are attached to many of the merchandise.

The touch panel 14 functions as a display device for displaying various screens including touch keys and an input device for receiving input of information assigned to the touch key by receiving touch input of the touch key. The touch panel 14 serves as a touch panel input device 20 in cooperation with the CPU 1, the ROM 2, the RAM 3, and the auxiliary storage unit 4. Hereinafter, the touch panel input device 20 will be described in detail.

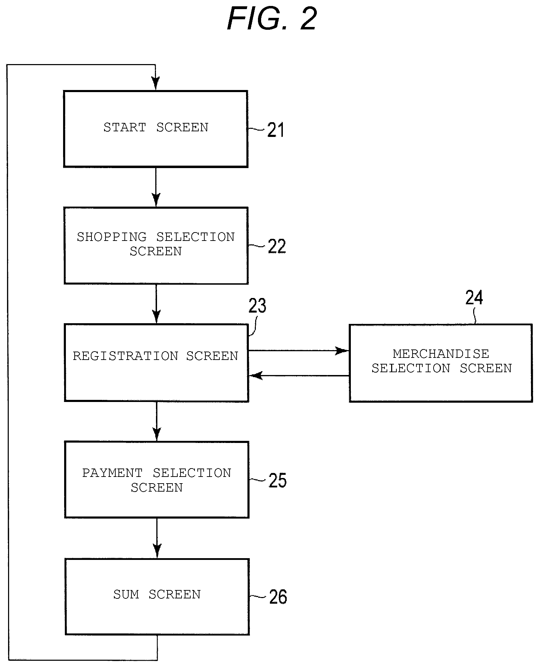

FIG. 2 illustrates an example of screen transitions of screens displayed on the touch panel 14. When the self POS terminal is in a default state, the touch panel input device 20 displays a start screen 21 on the touch panel 14. The touch key (start key) for instructing a start of settlement is disposed in the start screen 21. When the start key is touched and operated, the touch panel input device 20 displays a shopping selection screen 22 on the touch panel 14. A plurality of touch keys (shopping keys) for a user (purchaser) to select a shopping method (bringing my bag, use of plastic shopping bag, shopping seal, or the like) are disposed in the shopping selection screen 22. When one of the shopping keys is touched and operated, the touch panel input device 20 displays a registration screen 23 on the touch panel 14. A plurality of touch keys (merchandise group keys) for designating merchandise group (for example, vegetable, fruit, seafood, prepared foods, and the like) with no bar code and a touch key (sum key) for terminating the registration of the purchased merchandise and instructing calculation of the sum of registered merchandise are disposed in the registration screen 23 in addition to an area in which the specification and the total amount of registered merchandise and the like are displayed.

When one of the merchandise group keys is touched and operated, the touch panel input device 20 displays a merchandise selection screen 24 on the touch panel 14. A plurality of touch keys (merchandise key) to which merchandise belonging to the merchandise groups which are assigned to touch-operated merchandise group key is respectively assigned are disposed in the merchandise selection screen 24. When one of the merchandise keys is touched and operated, the screen of the touch panel 14 is returned to the registration screen 23 by the touch panel input device 20. At this time, sales data of merchandise assigned to the touch-operated merchandise key is processed to be registered, and details are displayed on the registration screen 23 in the self POS terminal.

When the sum key is touched and operated, the touch panel input device 20 displays a payment selection screen 25 on the touch panel 14. A plurality of touch keys (payment keys) for a user to select a method of payment (cash, credit card, e-money, or the like) is disposed in the payment selection screen 25. When one of the payment keys is touched and operated, the touch panel input device 20 displays a sum screen 26 on the touch panel 14. At this time, a process of sum is executed according to the touch operated payment method in the self POS terminal. Then, information of sum (amount of payment, amount of change, change of electronic money, and the like) is displayed on the sum screen 26. When the process of sum is ended, the touch panel 14 is returned to the start screen 21 by the touch panel input device 20.

The touch panel input device 20 performs the screen transitions in this order shown in FIG. 2 and has a function for selectively adding icons with respect to the touch keys on the screen. The icon indicates accompanying information with respect to information which is input by a touch operation of the touch key. In the present embodiment, the accompanying information is promotional information.

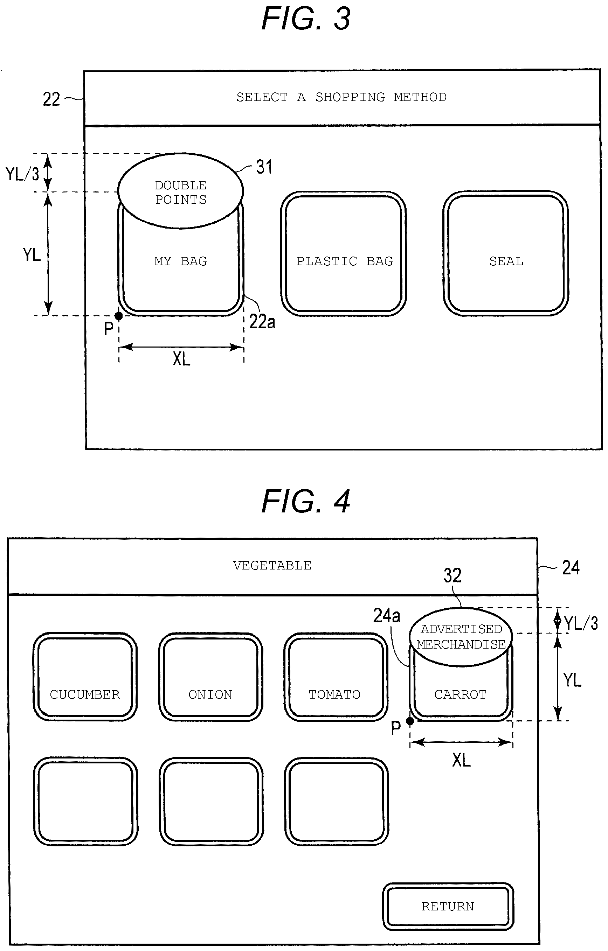

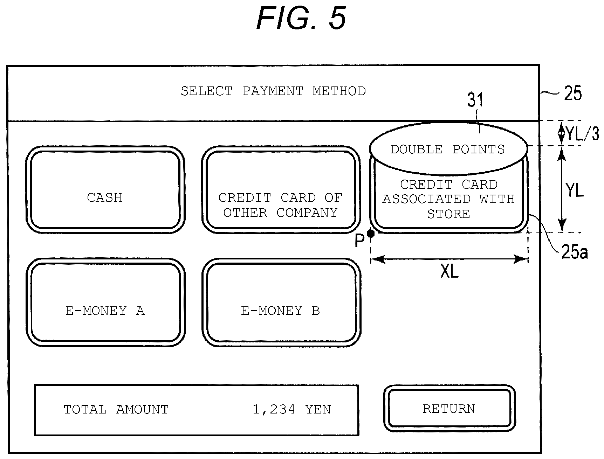

Specific examples are shown in FIG. 3 to FIG. 5. FIG. 3 is an example in which an icon 31 of "double points" is attached to a shopping key 22a of "bringing my bag" in the shopping selection screen 22. This example is in accordance with promotional information of "double service points to shoppers who bring their own bags". FIG. 4 is an example in which an icon 32 of "advertising merchandise" is attached to a shopping key 24a of "carrot" in the merchandise selection screen 24. This example is in accordance with promotional information of "carrot is advertised merchandise". FIG. 5 is an example in which an icon 31 of "double points" is attached to a payment key 25a of "credit card of this company" in the payment selection screen 25. This example is in accordance with promotional information of "double service points to shoppers who pay by credit card of this company".

As shown in FIG. 3 to FIG. 5, a shape of the touch key is a rectangle with rounded corners in the present embodiment. A length of a horizontal side of the rectangle is XL and a length of a longitudinal side of the rectangle is YL. The length XL and the length YL are determined by the number or the like of touch keys displayed on one screen. Also, in the present embodiment, the shape of the icon to be attached to the touch key is a horizontally long ellipse. Then, a long axis of the ellipse is matched to an upper side of the touch key. Further, a short radius of the ellipse is one-third of the length YL.

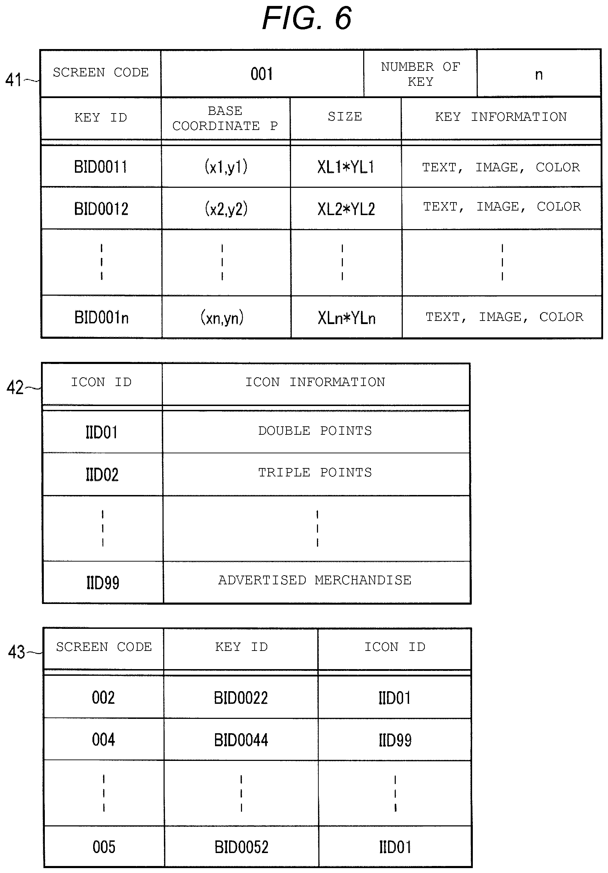

The touch panel input device 20 includes data tables 41 to 43 in the RAM 3 or the auxiliary storage unit 4 shown in FIG. 6 so as to implement such a function.

Data needed for disposing the touch keys in each of the screens 21 to 25 is respectively stored in the data tables 41 for each of the screens 21 to 25. That is, the number of the data tables 41 is the number of the screens 21 to 25. The data table 41 has a screen code area, an area of the number of keys, and areas of a plurality of key data. A unique screen code is set for each of the screens 21 to 25 in the screen code area. The number n of the touch key displayed on the screen specified by the screen codes is set in the area of the number of the keys. A key ID, a base coordinate, size data, and key information for each of the touch key are set in the area of key information. The key ID is a unique code identifying each of the touch keys individually. The base coordinate and the size data are parameters indicating arrangement positions and sizes of the touch keys. The key information includes display data (text or image) and properties (background color and the like) of information assigned to the key.

In the present embodiment, a position (point) on the screen of the touch panel 14 is displayed as a two-dimensional orthogonal coordinate system (x, y). Then, as shown in FIG. 3 to FIG. 5, a lower left corner of the touch key is a base point P and an orthogonal coordinate of the base point P is a base coordinate (xi, yi). Also, the lengths XL and YL of each side of the touch key are size data of the touch key. That is, the base coordinate and the size data stored in the data table 41 are first information indicating the position of each touch key on the screen. Likewise, the key information stored in the same data table 41 is second information input by touch operation of the touch key. Here, a key information storage unit is configured to have the data table 41.

Data with respect to the icons selectively attached to the touch key of each of the screens 21 to 25 is stored in the data table 42. The data table 42 has an icon ID area and an icon information area. An icon ID is set in the icon ID area. The icon ID is a unique code identifying each of the icons individually. In the icon information area, information (promotional information) notified by the icons, for example, "double points", "triple points", "advertising merchandise", and the like are set.

The key ID of the touch key disposed on the screen specified by each screen code and the icon ID of the icon attached to the touch key are stored in the data table 43. The data table 43 has a screen code area, a key ID area, and an icon ID area. The screen code of the screen including the touch key to which the icon is attached is set in the screen code area. The key ID of the touch key to which the icon is attached is set in the key ID area. The icon ID of the icon which is attached to the touch key specified by the corresponding key ID is set in the icon ID area. That is, the data table 43 serves as an association information storage that stores identification information (icon ID) of the icon of third information (icon information) by which the second information (key information) is associated with identification information (key ID) of the touch key for input of the second information accompanied by the third information.

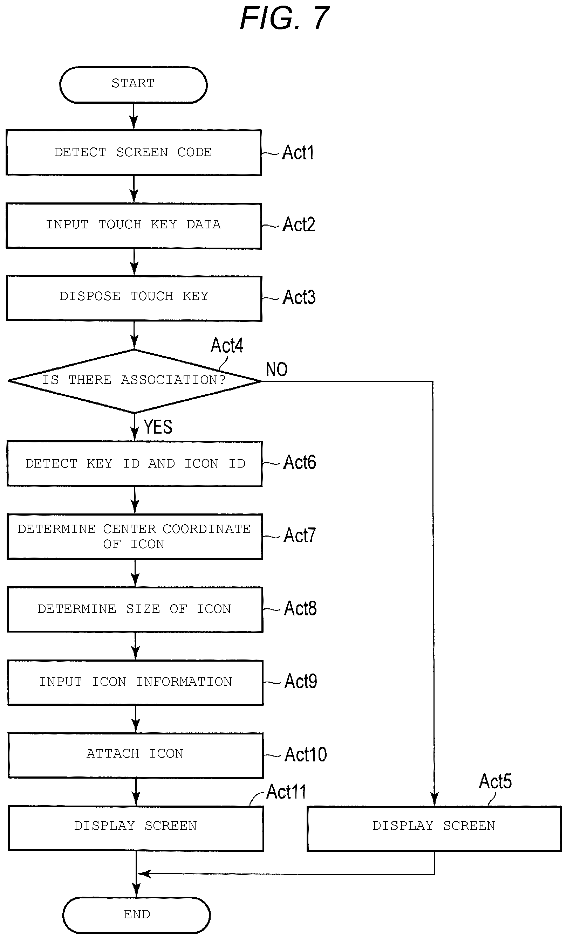

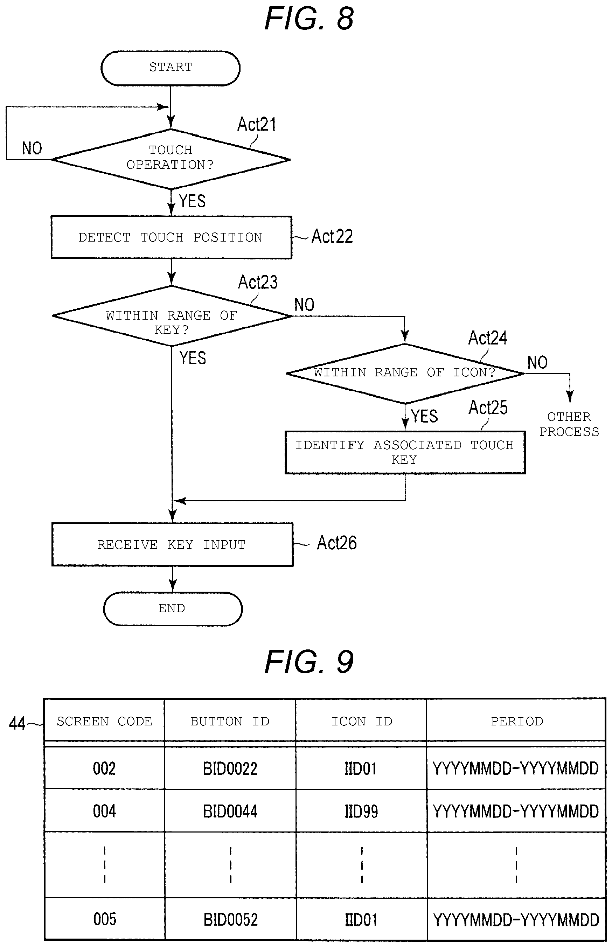

Thus, the computer of the touch panel input device 20 performs the information process of procedures illustrated in the flowcharts of FIG. 7 and FIG. 8. FIG. 7 is a flow chart showing a procedure of a screen display process executed by the CPU 1 according to a control program stored in the ROM 2 or the auxiliary storage unit 4. When the screen code is generated, this process is started. Furthermore, contents of the process to be described below as the reference with FIG. 7 is one example, the various processes can be appropriately utilized so as to achieve same results.

When a start key of the start screen 21 is touched and operated, a screen code of the shopping selection screen 22 is generated in the self POS terminal. When a shopping key of the shopping selection screen 22 is touched and operated, a screen code of the registration screen 23 is generated. When a merchandise group key of the registration screen 23 is touched and operated, a screen code of the merchandise selection screen 24 is generated. Also, when a sum key of the registration screen 23 is touched and operated, a screen code of the payment selection screen 25 is generated. When a payment key of the payment selection screen 25 is touched and operated, a screen code of the sum screen 26 is generated.

When these screen codes are generated, the CPU 1 detects these screen codes (Act 1). When these screen codes are detected, the touch key data (n-number of key ID, base coordinate P, size, key information) of the data table 41 in which these screen codes are set is input by the CPU 1 (Act 2). The CPU 1 modifies an image data based on the touch key data such that the n-number of touch keys are disposed on the screen specified by the screen code (Act3 : processing unit).

Next, the CPU 1 checks whether the detected screen code is set in the data table 43 (Act 4). If the screen code is not set (NO in Act 4), the CPU 1 displays a screen of the image data modified in Act 3 on the touch panel 14 (Act 5). Then, the screen display process is ended. Therefore, in this case, the icon is not attached to the touch key on the screen.

On the other hand, if the detected screen code is set in the data table 43 (YES in Act 4), the CPU 1 detects the key ID and the icon ID associated with the screen code (Act 6). Next, the base coordinate P and the size data stored in association with the key ID are input from the data table 41 of the detected screen code by the CPU 1. Then, the CPU 1 determines a center coordinate Q (Xn, Yn) of the icon based on the base coordinate P and the size data (Act 7: position determination unit). Also, the CPU 1 determines a size of the icon based on the same size data (Act 8: size determination unit).

Specifically, the CPU 1 calculates a coordinate of a point which is moved from a base coordinate Px by the half of the length XL in an X direction and moved from the base coordinate Px by the length YL in a Y direction, and the coordinate of the point is set as the center coordinate Q (Xn, Yn). Also, the half of the length XL is set as a long radius of the icon and the one-third of the length YL is set as a short radius of the icon by the CPU 1.

After the center coordinate Q (Xn, Yn) and the size data of the long radius and the short radius of the icon are obtained, the icon information associated with the icon ID is input from the data table 42 by the CPU 1 (Act 9). Then, the CPU 1 modifies the image data based on the center coordinate Q (Xn, Yn), the size data, and the icon information such that the icon is attached to the touch key of the screen specified by the screen code (Act 10: processing unit). Thereafter, the CPU 1 displays the screen of the image data modified in Act 3 and Act 10 on the touch panel 14 (Act 11). Then, the screen display process is ended. Therefore, in this case, the icon for notifying promotional information is attached to any touch key on the screen.

FIG. 8 is a flow chart showing a procedure of an input reception process executed by the CPU 1 according to the control program stored in the ROM 2 or the auxiliary storage unit 4. When the screen including the touch key is displayed on the touch panel 14, this process is started. Here, contents of the process to be described below as the reference with FIG. 8 is one example, the various processes can be appropriately utilized so as to achieve same results.

In the self POS terminal, the start screen 21, the shopping selection screen 22, the registration screen 23, the merchandise selection screen 24, and payment selection screen 25 include the touch keys. When these screens are displayed, the CPU 1 waits for these screen to be touched and operated (Act 21). When detecting that the screen is touched and operated by a signal from the touch panel 14 (YES in Act 21), the CPU 1 detects a position of the touch operation (Act 22). Then, the CPU 1 checks whether the position of the touch operation is within a region of the touch key (act 23).

If the position is within the region of the touch key (YES in Act 23), the CPU 1 receives an input of the touch key (Act 26). Then, the input reception process is ended.

On the other hand, if the position is not within the region of the touch key (NO in Act 23), the CPU 1 checks whether or not the position is within a region of the icon (act 24). If the position is within the region of the icon (YES in Act 24), the CPU 1 searches the data table 43 and identifies the touch key associated with the icon (Act 25). That is, the CPU 1 obtains the key ID associated with the icon ID of the icon. Then, the CPU 1 receives input of the touch key identified by the key ID (Act 26: acceptance unit). Then, the input reception process is ended.

When the input reception process is ended, an input process of information assigned to the input touch key is executed by the CPU 1. For example, when a start key is touched and operated, a screen code of the shopping selection screen 22 is generated by the CPU 1 in a state in which the start screen 21 is displayed. For example, when a shopping key is touched and operated, a screen code of the registration screen 23 is generated by the CPU 1 in a state in which the shopping selection screen 22 is displayed. At this time, as shown in FIG. 3, if a touch-operated shopping key is within the shopping key 22a of "bringing my bag" in which the icon 31 of "double points" is displayed, a process for double service points is executed by the CPU 1. Since these input processes are already realized in related self POS terminals, detailed descriptions thereof will be omitted.

In the present embodiment, if there is accompanying information with respect to information assigned to the touch key, the icon indicating the accompanying information is attached to the touch key. The user can easily realize the accompanying information of the touch key from the icon attached to the touch key. As a result, the point-of-sale terminal can diffuse information more efficiently. the user is more likely to be aware of the information relating to the information assigned to the touch key.

Further, according to the present embodiment, the icon has the same width as the touch key and is attached to overlap with the touch key. Then, even when the user touches an area of the icon, the information assigned to the touch key to which the icon is attached is input. Therefore, since a relationship between the information which is input by the touch key and the information which is notified by the icon is clear, even if the icon is touched and operated by the user, the touch panel input device 20 can regard the touch operation as an input of the touch key to which the icon is attached.

### Second Embodiment

In a second embodiment, the data table 43 is changed to a data table 44 shown in FIG. 9. That is, period data are included in the data table 44. The period data indicate a period during which the icon specified by the corresponding icon ID is displayed. The period data include date of a period start date and a period end date. A specific time of period start and period end may be also included in addition to the dates.

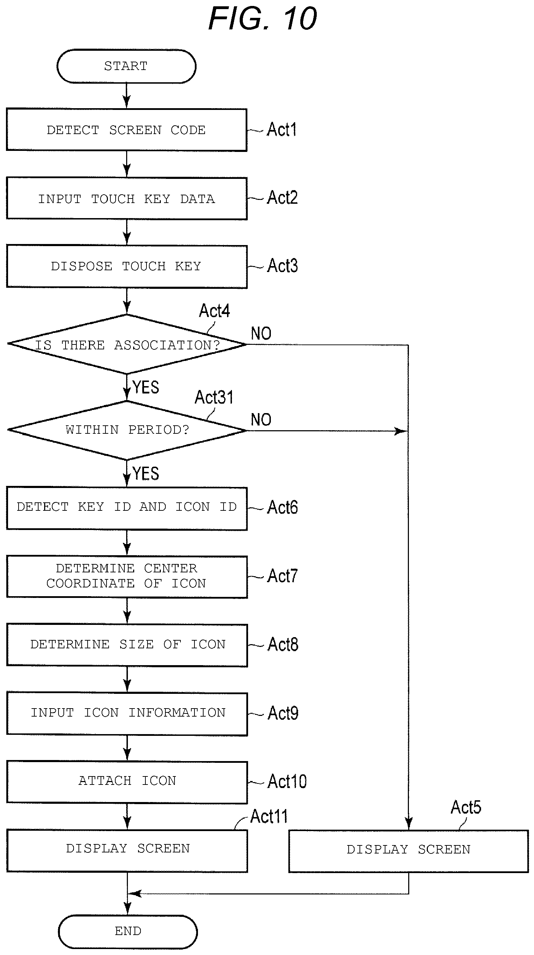

In the second embodiment including the data table 44 of such a configuration, a part of the procedure of the screen display process is different from the first embodiment thereof. FIG. 10 is a flow chart showing the procedure of the screen display process executed by the CPU 1 according to the second embodiment. Furthermore, the same reference numerals are used for the same steps (Acts) as in FIG. 7 and the detailed description thereof will be omitted.

As shown in FIG. 10, in the second embodiment, if the detected screen code is set to the data table 43 (YES in Act 4), the CPU 1 detects a period data set in the data table 43 in association with the screen code. Then, the CPU 1 determines whether or not a current date and time clocked by the clock unit 5 are within a period set by the period data (Act 31). If the current date and time are within the period (YES in Act 31), the processes of Act 6 to Act 11 described above are executed by the CPU 1. If the current date and time are not within the period (NO in Act 31), the process of Act 5 described above is executed by the CPU 1.

According to the second embodiment of such a configuration, the period during which the icon is attached to the touch key can be set arbitrarily. Therefore, even if the icon notifies information during a limited period, it can be easily implemented that the icon is attached to the touch key within only the period.

The exemplary embodiment is not limited to the above embodiments. For example, a reference coordinate and a size of the icon attached to the touch key may not be determined by a reference coordinate and a size of the touch key. The icon with a predetermined size may be displayed so as to overlap with at least a part of the touch key.

Also, the touch panel input device which functions as the display device and the input device of the self POS terminal is illustrated in the present embodiment, but the same can be applied to a touch panel input device of electronic equipment other than the self POS terminal.

Furthermore, transfer of the touch panel input device is generally performed in a state in which a program such as a control program or the like is stored in the ROM. However, the transfer is not limited to this, the control program or the like transferred regardless of a computer device may be written according to an operation of a user in a writable storage device provided in the computer device. The transfer of the control program and the like can be performed by being recorded in a removable recording medium or by communication via a network. The program can be stored in the recording medium such as a CD-ROM, a memory card, or the like and form thereof is not limited as long as the device can read the program. Also, a function obtained by an installation of the program or a downloading may be realized in cooperation with an operating system (OS) or the like inside the device.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framwork of the inventions. The accompanying claims and their equivalents are intended to cover such forms or modifications as would fall within the scope of the inventions.

## Claims

1. A point-of-sale terminal, comprising:
a touch panel screen;
a data storage including a first memory region for storing for each of multiple first selectable objects to be displayed on the touch panel screen, display location and display size of the first selectable object, attributes of an image to be displayed as the first selectable object, and an operation command to be issued upon selection of the first selectable object, and a second memory region for storing data of a second selectable object to be overlaid on one of the first selectable objects that is associated therewith, on the touch panel screen; and
a processor configured to
arrange the first selectable objects on the touch panel screen in accordance with the locations and sizes and the attributes stored in the first memory region,
determine a location and a size of the second selectable object, based on the location and size of the first selectable object that is associated with the second selectable object,
arrange the second selectable object of the determined size on the determined location of the touch panel screen, so as to be at least partially overlaid on the associated first selectable object, and
responsive to a selection of the second selectable object or the first selectable object associated with the second selectable object, issue the operation command for the first selectable object associated with the second selectable object.

2. The terminal according to claim 1, wherein
the location and size of the second selectable object is determined also based on the attributes of the image to be displayed as the first selectable object associated with the second selectable object.

3. The terminal according to claim 1 or 2, wherein
the second selectable object covers an area on the touch panel screen not covered by the first selectable object associated therewith.

4. The terminal according to any one of claims 1 to 3, wherein
the data of the second selectable object include a display term during which the additional selectable object is set to be displayed on the touch panel screen, and
the second selectable object is displayed on the touch panel screen, upon determination that a current time and date is within the display term.

5. A method of configuring a layout of selectable objects on a touch panel screen of a point-of-sale terminal, comprising:
in a first memory region, storing for each of multiple first selectable objects to be displayed on the touch panel screen, display location and display size of the first selectable object, attributes of an image to be displayed as the first selectable object, and an operation command to be issued upon selection of the first selectable object;
in a second memory region, storing data of a second selectable object to be overlaid on one of the first selectable objects that is associated therewith, on the touch panel screen;
arranging the first selectable objects on the touch panel screen in accordance with the locations and sizes and the attributes stored in the first memory region;
determining a location and a size of the second selectable object, based on the location and size of the first selectable object that is associated with the second selectable object;
arranging the second selectable object of the determined size on the determined location of the touch panel screen, so as to be at least partially overlaid on the associated first selectable object; and
responsive to a selection of the second selectable object or the first selectable object associated with the second selectable object, issue the operation command for the first selectable object associated with the second selectable object.

6. The method according to claim 5, wherein
the location and size of the second selectable object is determined also based on the attributes of the image to be displayed as the first selectable object associated with the second selectable object.

7. The method according to claim 5 or 6, wherein
the second selectable object covers an area on the touch panel screen not covered by the first selectable object associated therewith.

8. The method according to any one of claims 5 to 7, wherein
the data of the second selectable object include a display term during which the additional selectable object is set to be displayed on the touch panel screen, and
the second selectable object is displayed on the touch panel screen, upon determination that a current time and date is within the display term.

9. A non-transitory computer readable medium comprising instructions to be executed in a point-of-sale terminal having a touch panel screen, wherein the instructions when executed on a processor of the point-of-sale terminal carry out a method of configuring a layout of selectable objects on the touch panel screen, comprising:
in a first memory region, storing for each of multiple first selectable objects to be displayed on the touch panel screen, display location and display size of the first selectable object, attributes of an image to be displayed as the first selectable object, and an operation command to be issued upon selection of the first selectable object;
in a second memory region, storing data of a second selectable object to be overlaid on one of the first selectable objects that is associated therewith, on the touch panel screen;
arranging the first selectable objects on the touch panel screen in accordance with the locations and sizes and the attributes stored in the first memory region;
determining a location and a size of the second selectable object, based on the location and size of the first selectable object that is associated with the second selectable object;
arranging the second selectable object of the determined size on the determined location of the touch panel screen, so as to be at least partially overlaid on the associated first selectable object; and
responsive to a selection of the second selectable object or the first selectable object associated with the second selectable object, issue the operation command for the first selectable object associated with the second selectable object.

10. The non-transitory computer readable medium according to claim 9, wherein
the location and size of the second selectable object is determined also based on the attributes of the image to be displayed as the first selectable object associated with the second selectable object.

11. The non-transitory computer readable medium according to claim 9 or 10, wherein
the second selectable object covers an area on the touch panel screen not covered by the first selectable object associated therewith.

12. The non-transitory computer readable medium according to any one of claims 9 to 11, wherein
the data of the second selectable object include a display term during which the additional selectable object is set to be displayed on the touch panel screen, and
the second selectable object is displayed on the touch panel screen, upon determination that a current time and date is within the display term.
